# FASCICULE DE BREVET EUROPEEN

(11) **EP 0 726 633 B1**
(45) Date de publication et mention de la délivrance du brevet: **20.09.2000**
(21) Numéro de dépôt: 96400237.2
(22) Date de dépôt: 05.02.1996
(51) Int. Cl.: H02J 7/16, G01R 19/00

(54) **Dispositif régulateur de la tension de charge d'une batterie par un alternateur à moyens d'amorçage perfectionnés, notamment pour véhicule automobile**
Spannungsregler zum Laden einer Batterie mittels eines Wechselstromgenerators mit Initialzündung, insbesondere für Kraftfahrzeug
Voltage regulator for charging a battery with an alternator provided with means for initiating, especially for motor vehicle

(30) Priorité: 07.02.1995 FR 9501378
(43) Date de publication de la demande: 14.08.1996
(73) Titulaire: VALEO EQUIPEMENTS ELECTRIQUES MOTEUR, 94000 Creteil (FR)
(72) Inventeur: Pierret, Jean-Marie, F-75012 Paris (FR)
(74) Mandataire: Le Forestier, Eric

(56) Documents cités:
- EP-A- 0 055 149
- EP-A- 0 408 436
- EP-A- 0 519 805
- FR-A- 2 343 255
- US-A- 4 916 570

## Description

La présente invention concerne d'une façon générale les dispositifs régulateurs de la charge d'une batterie par un alternateur, notamment dans un véhicule automobile.

Un tel dispositif régulateur doit connaître l'instant où il doit se mettre en service lorsque le moteur du véhicule est démarré, afin d'appliquer à l'enroulement inducteur de l'alternateur le courant d'excitation qui permettra à la régulation de s'effectuer correctement.

Ceci est réalisé de la façon la plus conventionnelle, en appliquant à une entrée de commande du régulateur un signal obtenu lorsque la clé de contact du véhicule est fermée. Le régulateur établit alors le courant de pré-excitation.

Dès que l'alternateur entre en rotation, le courant de pré-excitation provoque une force électro-motrice sur les enroulements induits. Cette force électro-motrice est détectée par le régulateur qui applique à l'inducteur le courant d'excitation adapté pour pouvoir effectuer une régulation de la tension de batterie. L'amorçage de l'alternateur est ce passage de la phase de pré-excitation à la phase de régulation de la tension de batterie.

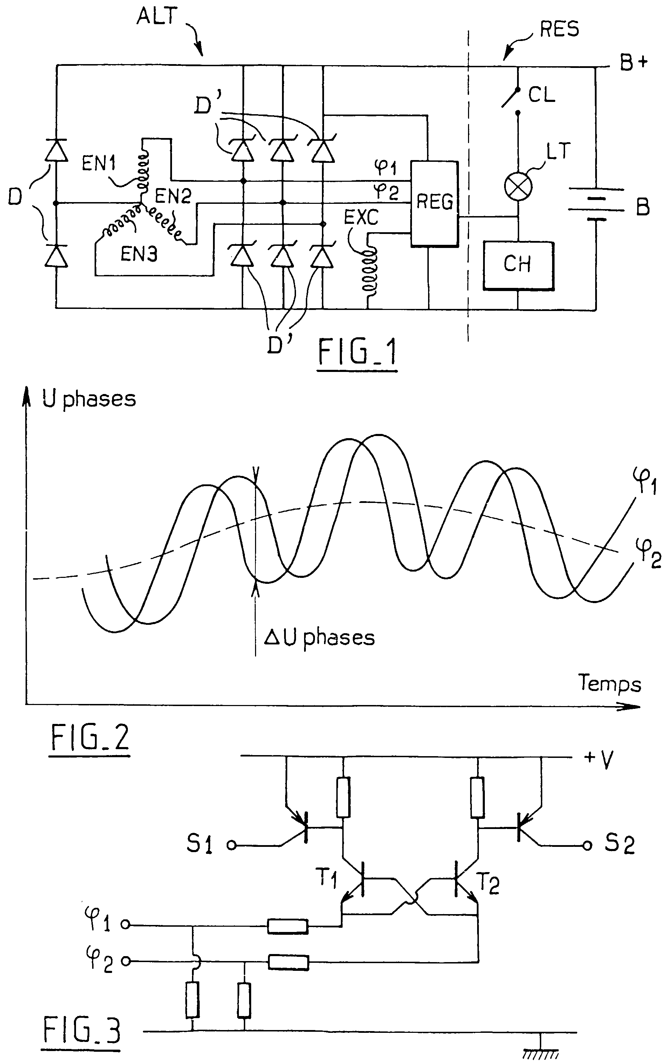

Ainsi, et en référence tout d'abord à la figure 1, on a représenté dans la partie gauche, et globalement désigné par ALT, un circuit d'alternateur triphasé conventionnel. Il comprend deux premières diodes D reliées au point commun des trois enroulement EN1, EN2 et EN3 du stator de l'alternateur, trois paires de diodes de redressement D', un circuit régulateur REG recevant deux des trois potentiels de phases des enroulements induits de l'alternateur, notés ϕ1 et ϕ2, et l'enroulement excitation EXC de l'alternateur relié entre une sortie du régulateur REG et la masse.

Le réseau de bord, illustré dans la partie droite et désigné par RES, comprend une batterie B, la clé de contact CL du véhicule, une lampe-témoin LT et une pluralité de charges CH destinées à être alimentées via la clé de contact CL et la lampe témoin LT.

Les charges principales du réseau ne sont pas illustrées.

La borne de la lampe LT opposée à la clé CL est reliée à une entrée de détection du circuit régulateur REG. Lorsque la clé de contact est ouverte, le potentiel sur cette borne est voisin de zéro. Le passage du potentiel sur cette borne à une valeur voisine de la tension de batterie B+ diminuée de la tension aux bornes de la lampe signale au circuit REG que la clé de contact a été fermée. Le circuit REG applique alors à l'enroulement de rotor EXC un courant de pré-excitation destiné à permettre l'amorçage de l'alternateur lorsque celui-ci sera entraîné en rotation et dès que les entrées de phases ϕ1 et ϕ2 du régulateur auront détecté la f.e.m. entre phases produite par la rotation.

Les entrées pour signaux de phases du régulateur REG ont également pour objet de permettre malgré tout un auto-amorçage du régulateur lorsqu'une anomalie telle que le mauvais serrage de la lampe LT, la rupture de son filament ou encore un faux contact au niveau de la clé ou de l'alternateur se produit. Ainsi le régulateur REG est capable de détecter l'apparition d'une tension entre phases due à la rémanence du circuit magnétique de l'alternateur lorsque l'alternateur tourne à vitesse suffisamment élevée à la suite du démarrage du moteur.

Un tel régulateur est décrit dans le document FR-A-2 678 070.

La figure 2 illustre les potentiels de phases ϕ1 et ϕ2, qui sont flottants, et la différence entre ces potentiels notée ΔUₚₕₐₛₑₛ, lorsque l'alternateur tourne sans excitation.

La figure 3 illustre un circuit, décrit dans le document FR-A-2 678 070 précité, qui permet de détecter la tension ΔUₚₕₐₛₑₛ, avec un seuil de l'ordre de 1 volt, qui est lié aux tensions de jonction Vbe des deux transistors bipolaires T1 et T2. Ce seuil s'avère approprié pour un amorçage à une vitesse de rotation de l'alternateur de l'ordre de 3000 tours/minute.

Ce circuit connu est donc capable de gérer un mode dégradé, mais il reste impératif, pour un fonctionnement normal, de recourir à une liaison électrique entre la lampe-témoin et l'entrée de détection du régulateur REG pour effectuer une pré-excitation. En effet, la vitesse d'amorçage de l'alternateur lorsqu'il y a pré-excitation est de l'ordre de 1200 tours/minute, et le fonctionnement du circuit de la figure 3 dans le seul mode dégradé impliquerait une diminution notable des performances d'amorçage.

On connaît également par FR-A-2 343 255 un comparateur de tension à fenêtre capable de de contrôler si un signal d'entrée différentiel dépasse l'une ou l'autre deux deux limites prédéterminées.

Toutefois, un tel circuit n'est pas capable d'opérer de façon fiable en présence de potentiels de phases d'un alternateur, pouvant présenter notamment du fait de perturbations une large excursion de valeurs, négatives et/ou excédant la tension d'alimentation du circuit de détection.

La présente invention vise à proposer un régulateur capable de s'amorcer dans tous les cas, de façon fiable et satisfaisante, sans recourir à une liaison spécifique entre la clé de contact ou la lampe (et plus spécifiquement le réseau de bord) et les circuits de l'alternateur, pour ainsi, notamment, simplifier le câblage en connectant simplement le circuit d'alternateur au réseau de bord par la masse et la tension B+.

La présente invention vise à atteindre ces objets en s'affranchissant des problèmes liés au contexte particulier des signaux de phases d'un alternateur.

Ainsi la présente invention concerne un dispositif régulateur de la tension de charge d'une batterie par un alternateur tel que défini dans la revendication 1.

Des aspects préférés, mais non limitatifs, du dispositif selon l'invention sont définis dans les sous-revendications 1 à 13.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une représentation schématique d'un circuit d'alternateur et de réseau de bord de véhicule automobile de l'état de la technique,
la figure 2 illustre l'évolution de deux potentiels de phases de l'alternateur en fonction du temps,
la figure 3 illustre un circuit de détection de tension entre phases selon la technique antérieure,

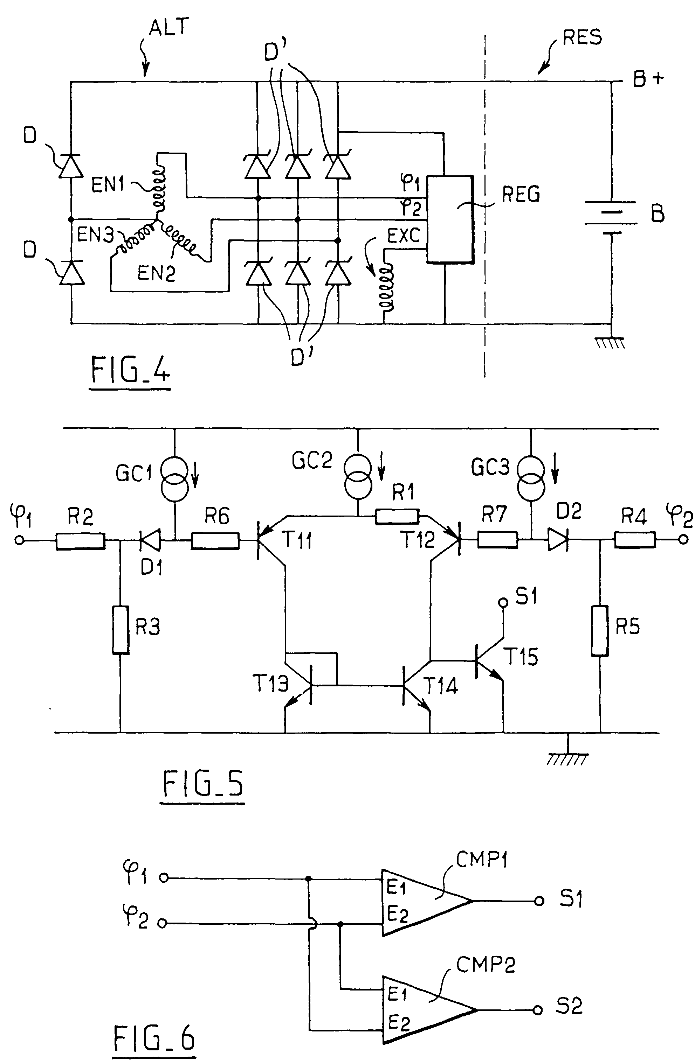

la figure 4 est une représentation schématique d'un circuit d'alternateur et de réseau de bord auquel s'applique la présente invention,
la figure 5 illustre un circuit de détection de tension entre phases selon une première forme de réalisation de l'invention,
la figure 6 illustre sous forme schématique un circuit de détection de tension entre phases selon une deuxième forme de réalisation de l'invention,

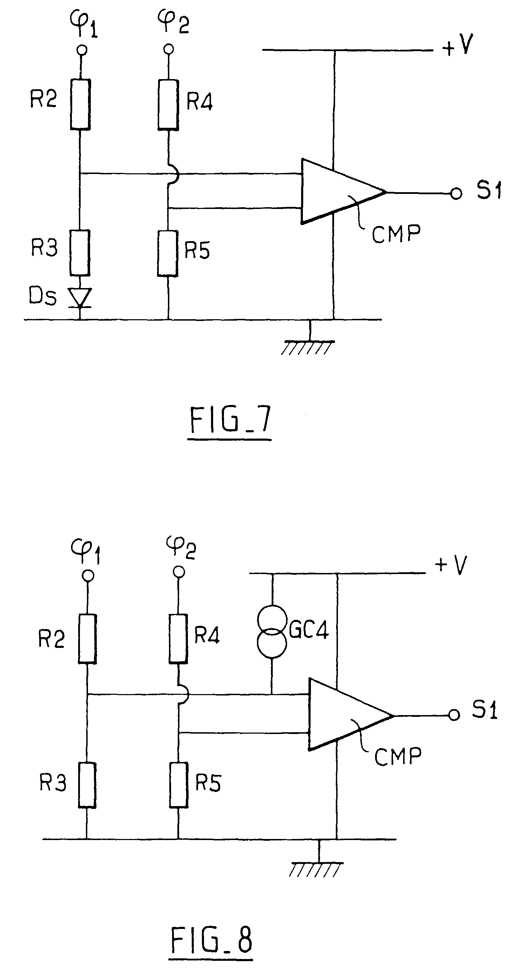

la figure 7 illustre sous forme schématique un circuit de détection de tension entre phases selon une troisième forme de réalisation de l'invention,
la figure 8 illustre sous forme schématique un circuit de détection de tension entre phases selon une quatrième forme de réalisation de l'invention,

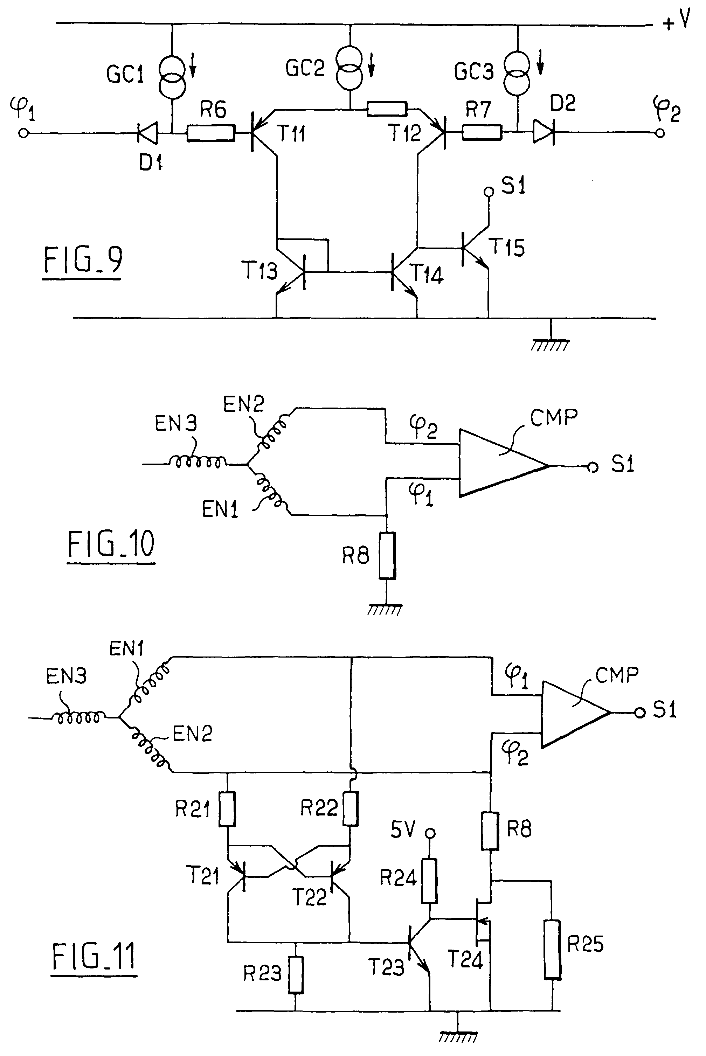

la figure 9 illustre sous forme schématique un circuit de détection de tension entre phases selon une variante de la première forme de réalisation de l'invention,
la figure 10 illustre sous forme schématique un circuit de détection de tension entre phases selon une cinquième forme de réalisation de l'invention, et
la figure 11 illustre sous forme schématique un circuit de détection de tension entre phases selon une sixième forme de réalisation de l'invention.

On notera préliminairement que, d'une figure à l'autre, des éléments ou parties identiques ou similaires sont désignés dans la mesure du possible par les mêmes signes de référence.

En référence maintenant à la figure 4, on a illustré dans la partie gauche un circuit d'alternateur ALT identique à celui de la figure 1, à l'exception du fait que le régulateur REG ne comporte pas d'entrée de détection reliée au réseau de bord RES comme dans le cas de la figure 1. Pour le reste, on trouve sur cette figure les trois enroulements de stator EN1 à EN3 de l'alternateur, les diodes de redressement D', l'enroulement d'excitation EXC, le circuit régulateur REG qui comporte seulement, outre ses liaisons d'alimentation à la tension B+ et à la masse, et sa sortie de commande d'excitation reliée à l'enroulement EXC, deux entrées sur lesquelles les potentiels de phase ϕ1 et ϕ2 sont appliqués.

Le réseau de bord RES comprend la batterie B et les charges électriques (non représentées).

On réalise donc un câblage simplifié, dans lequel le circuit d'alternateur est relié au réseau de bord simplement par sa borne de sortie positive et la masse.

Dans ce cas, la signalisation de défauts s'effectue sur d'autres équipements, par exemple dans une unité de contrôle moteur.

Selon l'invention, l'amorçage du régulateur est effectué dans tous les cas par une détection de la différence de potentiel entre les entrées phase ϕ1 et ϕ2, à l'aide d'un circuit de détection spécialement conçu à cet effet. On notera à cet effet que le circuit de l'état de la technique, représenté sur la figure 3, ne permet pas de remplir cette fonction, compte-tenu de ses caractéristiques notamment en matière de seuil.

Maintenant en référence à la figure 5, on a représenté une première forme de réalisation d'un circuit de détection selon l'invention. L'entrée E1 pour le signal de phase ϕ1 est reliée à une première borne d'une résistance R2 dont l'autre borne est reliée à la masse via une résistance R3, ainsi qu'à la cathode d'une diode D1. Un premier générateur de courant constant GC1 est relié entre la tension d'alimentation continue +V du circuit (en l'espèce égale à la tension B+ afin d'obtenir une bonne dynamique) et l'anode de D1. L'anode de D1 est également reliée via une résistance R6 à la base d'un transistor PNP T11. Un deuxième générateur de courant constant GC2 est relié entre la tension +V et l'émetteur de T11, tandis que le collecteur de T11 est relié au collecteur d'un autre transistor NPN T13 dont l'émetteur est à la masse. La base de T13 est reliée à son collecteur.

L'entrée E2 pour le signal de phase ϕ2 est reliée à une première borne d'une résistance R4 dont l'autre borne est reliée à la masse via une résistance R5, ainsi qu'à la cathode d'une diode D2. Un troisième générateur de courant constant GC3 est relié entre la tension d'alimentation continue +V du circuit et l'anode de D2. L'anode de D2 est également reliée via une résistance R7 à la base d'un transistor PNP T12. L'émetteur de T12 est reliée au deuxième générateur de courant constant GC2 via une résistance R1. Le collecteur de T12 est relié au collecteur d'un transistor NPN T14 dont l'émetteur est à la masse. Les bases de T13 et T14 sont reliées ensemble. Le collecteur de T14 est également relié à la base d'un transistor NPN T15. L'émetteur de T15 est à la masse, tandis que son collecteur est reliée à une borne de sortie de commande du circuit, notée S1.

Le circuit de la figure 5 constitue un comparateur différentiel déséquilibré par la résistance R1, de manière à détecter des différences de potentiel entre ϕ1 et ϕ2 de l'ordre de 200 à 300 mV, par exemple. La sensibilité du comparateur est fixée par la valeur ohmique de R1.

Les deux diodes D1 et D2 ont pour objet de décaler les signaux de phase ϕ1 et ϕ2 appliqués aux bases de T11 et de T12, respectivement, afin que le potentiel appliqué à ces bases ne risque pas de devenir négatif (ce qui aboutirait à une saturation du transistor).

Par ailleurs les paires de résistances R2, R3 et R4, R5 constituent respectivement deux ponts diviseurs permettant d'éviter d'appliquer aux bases de T11 et de T12 des potentiels trop élevés.

Ainsi, grâce au montage de la figure 5, les transistors T11 et T12 restent polarisés correctement même si les potentiels des signaux de phase ϕ1 et ϕ2 viennent à se trouver au-delà de la tension d'alimentation B+ ou en-deçà de la masse, comme cela est possible du fait du caractère flottant de ces potentiels.

On observera ici que, pour ne pas affecter la valeur du seuil de comparaison, les valeurs des résistances R2 à R5 doivent être aussi précises que possibles.

Sans entrer dans le détail du fonctionnement du circuit de la figure 5, on comprend que T15 est passant lorsque la différence entre les deux tensions phases, notée Uϕ1 - Uϕ2, est supérieure au seuil fixé par les valeurs de R1 à R5, par exemple 300 mV; on comprend également que T15 est bloqué si Uϕ1 - Uϕ2 est inférieure à 300 mV, et que T15 est également bloqué si Uϕ1 < Uϕ2.

De cette manière, le circuit de la figure 5 permet d'amener la borne de sortie S1 à un potentiel proche de la masse si et seulement si le potentiel Uϕ1 est supérieur d'au moins 300 mV au potentiel Uϕ2.

Or on a constaté, que, du fait de la rémanence des circuits magnétiques de l'alternateur, une telle différence de potentiel était facilement atteinte dès que l'alternateur était entraîné à une certaine vitesse de rotation, par exemple de l'ordre de 1200 tours/minute.

Afin d'améliorer la fiabilité de la détection, et maintenant en référence à la figure 6, il est avantageux de recourir à deux circuits comparateurs différentiels déséquilibrés selon la figure 5, associés de façon symétrique. Plus précisément, un premier comparateur différentiel CMP1 est relié comme décrit en référence à la figure 5, avec ses entrées E1 et E2 recevant respectivement les signaux de phase ϕ1 et ϕ2. Et un second comparateur différentiel CMP2, identique à CMP1, reçoit sur son entrée E1 le signal de phase ϕ2 et sur son entrée E2 le signal de phase ϕ1. La sortie du second comparateur CMP2 est désignée par S2.

De la sorte, par une combinaison appropriée des signaux de sortie S1 et S2, le circuit de la figure 6 est capable d'indiquer si Uϕ1 - Uϕ2 est supérieur ou inférieur à +300 mV, et si Uϕ2 - Uϕ1 est supérieur ou inférieur à 300 mV.

De cette manière, le circuit de la figure 6 indique l'existence d'une rotation de l'alternateur en déterminant si la valeur absolue de la différence Uϕ1 - Uϕ2 est supérieure à 300 mV.

Concrètement, le circuit régulateur REG détecte le passage de la sortie S1 (figure 5) ou de l'une des sorties S1 et S2 (figure 6) d'un niveau de tension élevé à un niveau de tension bas, signalant la rotation de l'alternateur, pour ainsi appliquer à l'enroulement EXC une excitation provoquant l'amorçage de l'alternateur et la régulation de la tension de batterie.

Après amorçage de l'alternateur, les potentiels des signaux phase deviennent beaucoup plus élevés. Ainsi ces signaux, du fait des tensions de jonction en polarisation directe dans les diodes de redressement, présentent des crêtes négatives se trouvant en-deçà de la masse et des crêtes positives se trouvant au-delà de la tension B+. Dans cette situation, les diodes D1 et D2 ne sont plus à même d'éviter la saturation des transistors T11 et T12, et les résistances R6 et R7 ont pour objet, en limitant le courant de base dans ces transistors, d'éviter le blocage des courants de collecteur, et évitent donc que le courant engendré par le générateur GC2 (typiquement de quelques dizaines de micro-ampères), ne circule via R6, D1, R2 d'un côté, et via R1, R7, D2 et R4 de l'autre côté, vers les enroulements de l'alternateur.

A propos des valeurs choisies pour R2, R3, R4 et R5, on observera que pour conserver une bonne sensibilité, la diminution de tension effectuée par ces ponts diviseurs doit être faible. On choisit de préférence un facteur de réduction compris entre 0,5 et 0,9, et de préférence voisin de 0,8, pour une tension d'alimentation égale à la tension de batterie B+.

On notera ici qu'il est possible d'améliorer la sensibilité du montage de la figure 5, en diminuant la valeur ohmique de R1 tout en prenant soin de réaliser au niveau des ponts diviseurs R2, R3 et R4, R5 des facteurs de division aussi égaux que possible. Une précision de 1 ou 2% pour les valeurs de ces résistances permet ainsi d'abaisser le seuil à une valeur de l'ordre de 50 à 100 mV.

Les montages décrits en référence aux figures 5 et 6 présentent, outre la possibilité pour l'alternateur de s'amorcer sans nécessiter de signal en provenance du réseau de bord (simplification du câblage), de nombreux autres avantages. En particulier, la détection différentielle de la tension entre phases permet d'éviter l'influence des ponts salins, ceux-ci pouvant perturber l'étage de détection de la fermeture de la clé de contact et ainsi provoquer une pré-excitation indésirable, déchargeant la batterie du véhicule si celui-ci reste à l'arrêt. En outre, la fonction de détection de défauts peut être séparée de la fonction de régulation, ce qui supprime un certain nombre de difficultés et notamment évite le recours dans le régulateur à un pont diviseur spécifique et à un circuit d'antiparasitage, nécessaires dans l'art antérieur pour alimenter le circuit de détection de défauts.

On va maintenant décrire en référence aux figures 7 et 8 des variantes de réalisation du circuit de la figure 5. On a vu que, dans le circuit de la figure 5, le déséquilibrage du comparateur différentiel était assuré par l'interposition d'une résistance R1 d'un côté du circuit.

Dans les circuits des figures 7 et 8, ce déséquilibrage est assuré en agissant au niveau des ponts diviseurs R2, R3 et R4, R5, respectivement. Le circuit CMP de la figure 7 comprend dans ce cas l'ensemble des éléments de la figure 5, à l'exception des résistances R2-R5 illustrées à l'extérieur de ce circuit, et de la résistance R1 qui est remplacée par une liaison non résistive.

Dans le cas de la figure 7, le déséquilibrage est assuré en plaçant en série avec la résistance R3, entre cette dernière et la masse, une diode DS dans le sens conducteur. La tension de jonction en direct de cette diode décale la tension appliquée au circuit comparateur au niveau du point commun entre les résistances R2 et R3.

Dans le cas de la figure 8, le déséquilibre est obtenu en ajoutant un générateur de courant constant GC4 entre la tension d'alimentation +V et le point commun entre les résistances R2 et R3. Le décalage est obtenu par l'accroissement de la tension aux bornes de la résistance R3 dû à la circulation du courant engendré dans cette résistance.

Maintenant en référence aux figures 9 et 10, on va décrire une variante de réalisation du circuit de la figure 5 destinée à détecter la tension entre phases avec une sensibilité accrue, sans toutefois nécessiter des résistances de grande précision. Concrètement, l'objectif dans ce cas est de détecter le fait que la tension Uϕ1 - Uϕ2 dépasse une valeur de l'ordre de 50 mV, afin de détecter la rotation de l'alternateur pour des vitesses encore plus basses de celui-ci.

Le circuit de la figure 9 diffère de celui de la revendication 5 en ce que les ponts diviseurs R2, R3 et R4, R5 ont été purement et simplement supprimés. En l'absence de ces ponts diviseurs, le comparateur ne pourrait toutefois pas fonctionner pour des potentiels de phases proches de la valeur de B+ au niveau de l'alternateur. Ainsi, selon cette variante, on prend également la disposition consistant à éloigner ces potentiels de phases de la valeur B+. Cette disposition est illustrée sur la figure 10, et consiste à tirer le potentiel des enroulements de stator EN1-EN3 vers le bas, dans le présent exemple en prévoyant une résistance de faible valeur R8 entre l'une des phases (en l'espèce ϕ1) et la masse.

Concrètement, si l'on donne à R8 une valeur de l'ordre de 100 Ω, on constate qu'avec une batterie de 12 volts, le potentiel des signaux de phase ne dépasse jamais 10 volts. Et c'est seulement dans le cas de de l'existence d'un défaut, conduisant à l'établissement d'une liaison résistive inférieure ou égale à environ 20 Ω, que cette valeur de 10 volts est dépassée. Un tel défaut est par exemple l'établissement d'un court-circuit entre un conducteur de compte-tours relié à une phase de l'alternateur et le B+ de la batterie.

Ainsi, en temps normal, il reste toujours une différence de potentiel d'au moins 2 volts entre les potentiels appliqués aux entrées ϕ1 et ϕ2 et la tension d'alimentation du comparateur, ce qui lui permet de fonctionner normalement.

La suppression des résistances R2-R5 évite donc d'induire des imprécisions, et le seuil du comparateur est fixé simplement par un choix approprié de la valeur de R1.

Dans le circuit des figures 9 et 10, lorsque l'alternateur tourne à des vitesses importantes, la résistance R8 est traversée par un courant important, et produit des dissipations d'énergie par effet Joule qui ne sont pas souhaitables.

Le circuit de la figure 11 est une variante de réalisation qui permet d'éviter la dissipation d'une puissance importante par la résistance R8 dès que la rotation de l'alternateur est détectée.

Ce circuit comprend un étage différentiel construit autour des transistors T21, T22 et R21-R23 et recevant les potentiels de phases ϕ1 et ϕ2. Lorsque l'alternateur est à l'arrêt, cet étage différentiel délivre au transistor NPN T23 une tension proche de zéro, et celui-ci est bloqué. Le transistor MOS T24 est donc rendu conducteur via la résistance R24 reliée à une source de tension continue, et la borne basse de la résistance R8 est à la masse.

Lorsqu'en revanche l'alternateur tourne, la différence de potentiel entre ϕ1 et ϕ2 a pour effet, via l'étage différentiel, de rendre T23 conducteur, ce qui à son tour bloque T24. L'enroulement EN2 est donc relié à la masse via la liaison en série de R8 et de R25, cette dernière résistance ayant une valeur bien plus élevée que R8. Il en résulte que la puissance Joule dissipée dans ces résistances lorsque l'alternateur tourne est extrêmement limitée.

Bien entendu, la présente invention n'est nullement limitée aux formes de réalisation décrites et représentées, mais l'homme de l'art saura y apporter toute variante ou modification conforme à son esprit.

## Revendications

1. Dispositif régulateur (REG) de la tension de charge d'une batterie (B) par un alternateur (ALT), où l'alternateur n'est relié à la batterie que par deux conducteurs entre lesquels s'établit la tension de bord du véhicule, et où l'alternateur est polyphasé, le dispositif comprenant des moyens pour détecter le début de la rotation de l'alternateur afin d'appliquer à ce dernier un courant d'excitation, **caractérisé en ce que** les moyens de détection comprennent un étage différentiel déséquilibré (CMP) recevant sur deux entrées deux potentiels de phases (Uϕ1, Uϕ2) de l'alternateur et dont la sortie (S1) est reliée à une entrée de commande d'excitation de l'alternateur, ledit étage différentiel comprenant un générateur de courant constant (GC2), deux premiers transistors (T11, T12) commandés par des signaux dérivés des deux potentiels de phases, respectivement, et deux seconds transistors (T13, T14) reliés respectivement aux premiers transistors, la sortie des moyens de détection étant obtenue à partir de la tension présente sur la liaison entre l'un (T12) des premiers transistors et un second transistor (T14) associé, et ledit étage différentiel comprenant en outre entre les entrées pour les potentiels de phase (Uϕ1, Uϕ2) et les bornes de commande des premiers transistors (T11, T12) deux ponts diviseurs (R2, R3; R4, R5) associés à deux moyens de décalage de tension respectifs (D1, D2), de manière à détecter une différence de potentiel due à la rémanence du circuit magnétique de l'alternateur lors de l'entrée en rotation de celui-ci en maintenant les potentiels appliqués auxdites bornes de commande dans des intervalles acceptables.

2. Dispositif selon la revendication 1, caractérisé en ce que l'étage différentiel est alimenté par la tension de batterie et en ce que les ponts diviseurs présentent un facteur de réduction de tension proche de 1.

3. Dispositif selon la revendication 1 ou 2, caractérisé en ce que les deux ponts diviseurs (R2, R3; R4, R5) sont identiques, et en ce que le générateur de courant constant est relié aux deux premiers transistors par des liaisons de résistances différentes (R1).

4. Dispositif selon la revendication 3, caractérisé en ce que l'une des liaisons entre le générateur de courant constant (GC2) et un premier transistor (T11) présente une résistance sensiblement nulle.

5. Dispositif selon la revendication 1 ou 2, caractérisé en ce que les deux ponts diviseurs (R2, R3, DS; R2, R3, GC4; R4, R5) sont différents et en ce que le générateur de courant constant (GC2) est relié aux deux premiers transistors (T11, T12) par des liaisons de même résistance, de préférence sensiblement nulle.

6. Dispositif selon la revendication 5, caractérisé en ce que l'un des ponts diviseurs comprend deux résistances (R2, R3) et une diode (DS) branchée en direct en série avec l'une des résistances, et en ce que l'autre pont diviseur comprend deux résistances (R4, R5) ayant sensiblement mêmes valeurs que les deux résistances du premier pont diviseur.

7. Dispositif selon la revendication 5, caractérisé en ce que l'un des ponts diviseurs comprend deux résistances (R2, R3) et un générateur de courant constant (GC4) faisant circuler un surcroît de courant dans l'une des résistances, et en ce que l'autre pont diviseur comprend deux résistances (R4, R5) ayant sensiblement mêmes valeurs que les deux résistances du premier pont diviseur.

8. Dispositif selon la revendication 1, caractérisé en ce que les signaux de phases sont appliqués aux bornes de commande des deux premiers transistors (T11, T12) sans division de tension, et en ce qu'il est prévu en outre entre les enroulements de stator de l'alternateur et une tension de référence une liaison résistive de faible valeur (R8) apte à éloigner les potentiels des signaux de phases (Uϕ1, Uϕ2) d'une tension d'alimentation de l'étage différentiel.

9. Dispositif selon la revendication 8, caractérisé en ce qu'il comprend en outre des moyens (T21-T24) pour mettre hors-circuit ladite liaison résistive de faible valeur (R8) lorsqu'une rotation de l'alternateur a été détectée.

10. Dispositif selon l'une des revendications 1 à 9, caractérisé en ce que moyens de décalage de tension comprennent deux diodes (D1, D2) et deux autres générateurs (GC1, GC3) de courant aptes à faire circuler un courant dans lesdites diodes.

11. Dispositif selon la revendication 10, caractérisé en ce qu'il est également prévu entre chaque diode (D1, D2) et la borne de commande du premier transistor associé (T11, T12) une résistance série (R6, R7).

12. Dispositif selon l'une des revendications 1 à 11, caractérisé en ce que les moyens de détection comprennent deux étages différentiels indépendants (CMP1, CMP2) agencés symétriquement.

13. Dispositif selon l'une des revendications 1 à 12, caractérisé en ce que les moyens de détection (CMP) sont aptes à détecter une différence entre les potentiels de signaux de phases de l'ordre de 50 à 300 mV.

## Patentansprüche

1. Reglervorrichtung (REG) zur Regelung der Ladespannung zum Laden einer Batterie (B) durch einen Wechselstromgenerator (ALT), wobei der Wechselstromgenerator mit der Batterie nur durch zwei Leiter verbunden ist, zwischen denen sich die Bordspannung des Fahrzeugs aufbaut, und wobei der Wechselstromgenerator ein Mehrphasengenerator ist, wobei die Vorrichtung Mittel umfaßt, um den Beginn der Drehung des Wechselstromgenerators zu erfassen, um an diesen einen Erregerstrom anzulegen, **dadurch gekennzeichnet**, daß die Erfassungsmittel eine unsymmetrische Differentialstufe (CMP) umfassen, die an zwei Eingängen zwei Phasenpotentiale (Uϕ1, Uϕ2) des Wechselstromgenerators empfängt und deren Ausgang (S1) mit einem Steuereingang zur Steuerung der Erregung des Wechselstromgenerators verbunden ist, wobei die besagte Differentialstufe einen Konstantstromerzeuger (GC2), zwei erste Transistoren (T11, T12), die durch von den zwei Phasenpotentialen abgeleitete Signale gesteuert werden, und zwei zweite Transistoren (T13, T14)) umfaßt, die mit den ersten Transistoren verbunden sind, wobei sich der Ausgang der Erfassungsmittel ausgehend von der Spannung ergibt, die an der Verbindung zwischen einem (T12) der ersten Transistoren und einem zugehörigen zweiten Transistor (T14) anliegt, und wobei die besagte Differentialstufe außerdem zwischen den Eingängen für die Phasenpotentiale (Uϕ1, Uϕ2) und den Steueranschlüssen der ersten Transistoren (T11, T12) zwei Spannungsteilerbrücken (R2, R3; R4, R5) umfaßt, die mit zwei Spannungsverschiebungsmitteln (D1, D2) verbunden sind, um einen Potentialunterschied, der durch die Restmagnetisierung des magnetischen Kreises des Wechselstromgenerators bedingt ist, bei dessen Anlaufen zu erfassen, wobei die in akzeptablen Abständen an die besagten Steueranschlüsse angelegten Potentiale beibehalten werden.

2. Vorrichtung nach Anspruch 1, **dadurch gekennzeichnet**, daß die Differentialstufe durch die Batteriespannung gespeist wird und daß die Spannungsteilerbrücken einen Spannungsverminderungsfaktor nahe 1 aufweisen.

3. Vorrichtung nach Anspruch 1 oder 2, **dadurch gekennzeichnet**, daß die zwei Spannungsteilerbrücken (R2, R3; R4, R5) identisch sind und daß der Konstantstromerzeuger mit den beiden ersten Transistoren durch Verbindungen mit verschiedenen Widerständen (R1) verbunden ist.

4. Vorrichtung nach Anspruch 3, **dadurch gekennzeichnet**, daß eine der Verbindungen zwischen dem Konstantstromerzeuger (GC2) und einem ersten Transistor (T11) einen Widerstand etwa gleich Null aufweist.

5. Vorrichtung nach Anspruch 1 oder 2, **dadurch gekennzeichnet**, daß die zwei Spannungsteilerbrücken (R2, R3, DS; R2, R3, GC4; R4, R5) verschiedenen sind und daß der Konstantstromerzeuger (GC2) mit den beiden ersten Transistoren (T11, T12) durch Verbindungen mit dem gleichen Widerstand, vorzugsweise etwa gleich Null, verbunden ist.

6. Vorrichtung nach Anspruch 5, **dadurch gekennzeichnet**, daß eine der Spannungsteilerbrücken zwei Widerstände (R2, R3) und eine Diode (DS) umfaßt, die in Vorwärtsrichtung in Reihe an einen der Widerstände angeschlossen ist, und daß die andere Spannungsteilerbrücke zwei Widerstände (R4, R5) umfaßt, die in etwa die gleichen Werte wie die zwei Widerstände der ersten Spannungsteilerbrücke aufweisen.

7. Vorrichtung nach Anspruch 5, **dadurch gekennzeichnet**, daß eine der Spannungsteilerbrücken zwei Widerstände (R2, R3) und einen Konstantstromerzeuger (GC4) umfaßt, der einen Überstrom in einem der Widerstände fließen läßt, und daß die andere Spannungsteilerbrücke zwei Widerstände (R4, R5) umfaßt, die in etwa die gleichen Werte wie die zwei Widerstände der ersten Spannungsteilerbrücke aufweisen.

8. Vorrichtung nach Anspruch 1, **dadurch gekennzeichnet**, daß die Phasensignale an die Steueranschlüsse der beiden ersten Transistoren (T11, T12) ohne Spannungsteilung angelegt werden und daß außerdem zwischen den Ständerwicklungen des Wechselstromgenerators und einer Referenzspannung eine Widerstandskopplung mit niedrigem Wert (R8) vorgesehen ist, um die Potentiale der Phasensignale (Uϕ1, Uϕ2) von einer Speisespannung der Differentialstufe zu entfernen.

9. Vorrichtung nach Anspruch 8, **dadurch gekennzeichnet**, daß sie außerdem Mittel (T21-T24) umfaßt, um die besagte Widerstandskopplung mit niedrigem Wert (R8) auszuschalten, wenn eine Drehung des Wechselstromgenerators erfaßt worden ist.

10. Vorrichtung nach einem der Ansprüche 1 bis 9, **dadurch gekennzeichnet**, daß die Spannungsverschiebungsmittel zwei Dioden (D1, D2) und zwei andere Stromerzeuger (GC1, GC3) umfassen, die einen Strom in den besagten Dioden fließen lassen können.

11. Vorrichtung nach Anspruch 10, **dadurch gekennzeichnet**, daß außerdem zwischen jeder Diode (D1, D2) und dem Steueranschluß des zugehörigen ersten Transistors (T11, T12) ein Reihenwiderstand (R6, R7) vorgesehen ist.

12. Vorrichtung nach einem der Ansprüche 1 bis 11, **dadurch gekennzeichnet**, daß die Erfassungsmittel zwei unabhängige Differentialstufen (CMP1, CMP2) umfassen, die symmetrisch angeordnet sind.

13. Vorrichtung nach einem der Ansprüche 1 bis 12, **dadurch gekennzeichnet**, daß die Erfassungsmittel (CMP) in der Lage sind, einen Unterschied zwischen den Phasensignalpotentialen in einer Größenordnung von 50 bis 300 mV zu erfassen.

## Claims

1. Device (REG) for regulating the voltage at which a battery (B) is charged by an alternator (ALT), where the alternator is connected to the battery only by two conductors between which the vehicle on-board voltage is established, and, where the alternator is multiphase, the device comprising means for detecting the start of rotation of the alternator in order to apply an excitation current to the latter, characterised in that the detection means comprise an unbalanced differential stage (CMP) receiving at two inputs two phase potentials (Uϕ1, Uϕ2) of the alternator and whose output (S1) is connected to an excitation control input of the alternator, the said differential stage comprising a constant current generator (GC2), two first transistors (T11, T12) controlled by signals derived from the two phase potentials, respectively, and two second transistors (T13, T14) connected respectively to the first transistors, the output of the detection means being obtained from the voltage present at the connection between one (T12) of the first transistors and an associated second transistor (T14), and the said differential stage also comprising, between the inputs for the phase potentials (Uϕ1, Uϕ2) and the control terminals of the first transistors (T11, T12), two divider bridges (R2, R3; R4, R5) associated with two respective voltage shifting means (D1, D2), so as to detect a potential difference due to the remanence of the magnetic circuit of the alternator when the latter starts to rotate and maintaining the potentials applied to the said control terminals within acceptable ranges.

2. Device according to Claim 1, characterised in that the differential stage is fed by the battery voltage and in that the divider bridges have a voltage reduction factor of close to one.

3. Device according to Claim 1 or 2, characterised in that the two divider bridges (R2, R3; R4, R5) are identical, and in that the constant current generator is connected to the two first transistors by connections with different resistances (Rl).

4. Device according to Claim 3, characterised in that one of the connections between the constant current generator (GC2) and a first transistor (T11) has a substantially zero resistance.

5. Device according to Claim 1 or 2, characterised in that the two divider bridges (R2, R3, DS; R2, R3, GC4; R4, R5) are different and in that the constant current generator (GC2) is connected to the two first transistors (T11, T12) by connections with the same resistance, preferably substantially zero.

6. Device according to Claim 5, characterised in that one of the divider bridges comprises two resistors (R2, R3) and a diode (DS) connected in direct mode in series with one of the resistors, and in that the other divider bridge comprises two resistors (R4, R5) having substantially the same values as the two resistors of the first divider bridge.

7. Device according to Claim 5, characterised in that one of the divider bridges comprises two resistors (R2, R3) and a constant current generator (GC4) causing an increasing current to flow in one of the resistors, and in that the other divider bridge comprises two resistors (R4, R5) having substantially the same values as the two resistors of the first divider bridge.

8. Device according to Claim 1, characterised in that the phase signals are applied to the control terminals of the two first transistors (T11, T12) without voltage division, and in that there is also provided, between the windings of the alternator stator and a reference voltage, a resistive connection of low value (R8) able to move the potentials of the phase signals (Uϕ1, Uϕ2) away from a supply voltage of the differential stage.

9. Device according to Claim 8, characterised in that it also comprises means (T21-T24) for switching off the said low-value resistive link (R8) when a rotation of the alternator has been detected.

10. Device according to one of Claims 1 to 9, characterised in that voltage shifting means comprise two diodes (D1, D2) and two other current generators (GC1, GC3) able to cause a current to flow in the said diodes.

11. Device according to Claim 10, characterised in that a serial resistor (R6, R7) is also provided between each diode (D1, D2) and the control terminal of the first associated transistor (T11, T12).

12. Device according to one of Claims 1 to 11, characterised in that the detection means comprise two independent differential stages (CMP1, CMP2) arranged symmetrically.

13. Device according to one of Claims 1 to 12, characterised in that the detection means (CMP) are able to detect a difference between the phase signal potentials of around 50 to 300 mV.
